# EUROPEAN PATENT APPLICATION

(11) **EP 2 104 347 A1**
(43) Date of publication of application: **23.09.2009**
(21) Application number: 08290255.2
(22) Date of filing: 17.03.2008
(51) Int. Cl.: H04N 7/16

(54) **Method for providing IPTV to at least two groups of customers**

(71) Applicant: Alcatel Lucent, 75008 Paris (FR)
(72) Inventor: Kopp, Dieter, 75428 Illingen (DE); Orlamünder, Harald, 71254 Ditzingen (DE)
(74) Representative: Kohler Schmid Möbus

(57) **Abstract**

The invention relates to a method for providing at least two data streams (4a to 4c) for Internet Protocol Television, IPTV, to at least two groups (5a to 5c) of customers, the at least two groups (5a to 5c) of customers being attributed to different IPTV operators (A, B, C), the method comprising: distributing the at least two IPTV data streams (4a to 4c) from a common IPTV system (2) to each group (5a to 5c) of customers, and adding individual characteristics of the different IPTV operators (A, B, C), preferably brandings and/or individualized Electronic Program Guides, to the IPTV data streams (4a to 4c) distributed to the at least two groups (5a to 5c) of customers. The invention further relates to an IPTV system (2) for implementing the method, and to a computer network (1") comprising such an IPTV system (2).

## Description

### Background of the Invention

The invention relates to a method for providing at least two data streams for Internet Protocol Television, IPTV, to at least two groups of customers, the at least two groups of customers being attributed to different IPTV operators. The invention further relates to an IPTV system for providing at least two IPTV data streams to at least two groups of customers, the at least two groups of customers being attributed to different IPTV operators, and to a computer network comprising at least one such IPTV system.

For providing IPTV to a group of customers having a high need for an extensive amount of videos, the customers being connected to an existing network such as a Local Area Network (LAN) which is owned by an organisation ranging from a single school, office building or hospital right up to a geographically dispersed enterprise or college campus with global connections, several solutions are known.

A company named Videofurnace (http://www.videofurnace.com/) provides a service called Enterprise Digital Video Platform Validation using encrypted IPTV data streams for improving network security. The customers are not required to install resident client player software for viewing IPTV, thus reducing the risk of attacks on the player software by outsiders.

A company named mgate Media GmbH (http://www.m-gate.tv/) provides converged local networks for hospitals, a number of radio and TV programmes in the local network being distributed via an IPTV head end.

A network-based IPTV solution provided by a company named Exterity (cf. http://www.exterity.co.uk/) turns an existing computer network into an IPTV solution by installing IPTV head-end equipment in the network. The network managers can then take Digital Terrestrial and Satellite TV straight from the broadcaster via the aerial or satellite dish and distribute it over the LAN to any network point. Users can view IPTV by using a set-top box, or by directly connecting a Personal Computer to the network.

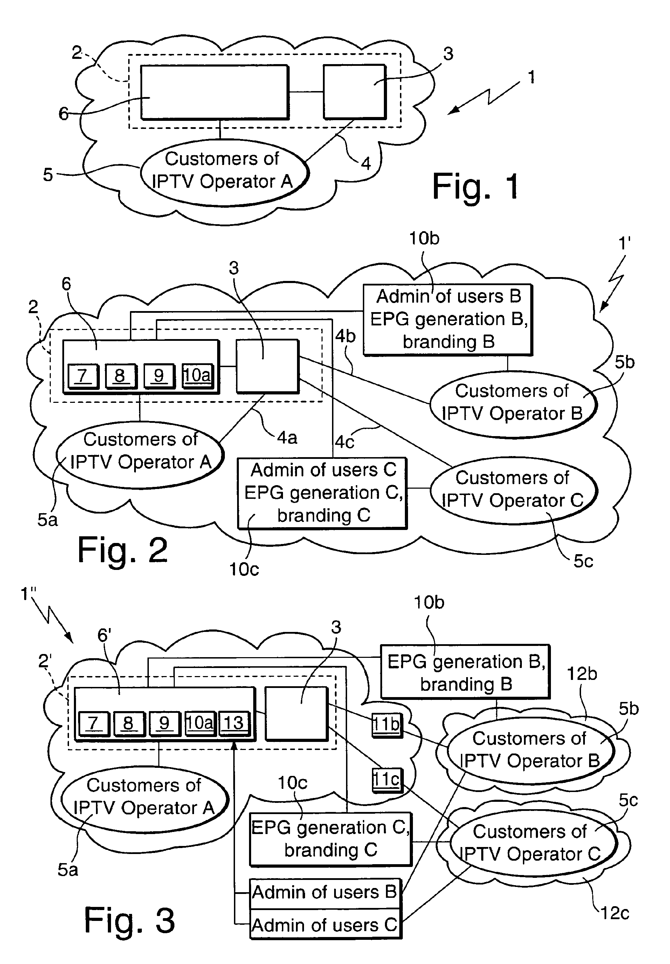

**Fig. 1** shows a solution of the kind described above for a computer network **1** in form of a LAN being owned by an operator **A**. In the network 1, an IPTV system **2** is provided, the IPTV system 2 comprising a head-end equipment **3** for providing an IPTV data stream **4** to the customers **5** of the operator A. The head end 3 is a MPEG (Moving Picture Experts Group) TS (Transport Stream) multiplexer) head-end, allowing to customize the data stream 4 provided to the customers 5. In such a way, using a processing unit such as a server **6,** the content which is distributed within the network 1 may be controlled by the operator A.

The solution described above has the advantage of guaranteed performance and scalability, as one head-end 3 can service as many users as there are network points. Similarly non-digital video sources (e.g. DVD's) can be distributed over the LAN 1 by using the encoder head-end 3. Moreover, server-based applications may be provided that allow Video on Demand (VoD) and Scheduled Broadcasting to be viewed over the network with the content available presented to the viewer as an Electronic Program Guide (EPG).

When an IPTV operator receives the Digital Terrestrial and Satellite TV straight from the broadcaster via the aerial or satellite dish and then distributes the IPTV data over the network, there is a need for the operator to add its individual characteristics, e.g. the EPG, to the data stream which is distributed to its customers.

### Object of the Invention

It is the object of the invention to provide: a method, an IPTV system, and a computer network of the kind described above, all of which provide a low-cost solution for operators to distribute IPTV data streams including individual characteristics to their customers.

### Summary of the Invention

This object is achieved by a method as described above, comprising: distributing the at least two IPTV data streams from a common IPTV system to each group of customers, and adding individual characteristics of the different IPTV operators, preferably brandings and/or Electronic Program Guides, to the IPTV data streams distributed to the at least two groups of customers.

Currently, an IPTV system is owned by one operator who serves his customers with live TV and Video on Demand (VoD). According to the invention, it is proposed that operators which have a certain relationship with each other share a common IPTV system, thus requiring only a single IPTV system equipment for distributing IPTV data to more than one group of customers. For each group of customers, individual characteristics of the IPTV operators may be added to the data streams distributed by the common IPTV system. The customers of a group may be connected individually to a common computer network such as the internet, the members of a group being subscribers to the same IPTV operator, or alternatively, a group of customers may be connected to a global network via a common link, e.g. a border node, in the latter case the customers being part of a local network which is typically owned and operated by one of the IPTV operators.

In a preferred variant, adding of the individual characteristics to the IPTV data streams is performed in the common IPTV system. In this way, only a single equipment for adding the individual characteristics to the IPTV data streams is required.

Preferably, a selection of the content of Live Television data contained in each of the IPTV data streams is performed in dependence of the IPTV operator. In such a way, the contents of the IPTV data streams may be further individualized.

In a highly preferred variant, video data to be added to at least one IPTV data stream for providing Video on Demand, VoD, to at least one group of customers is stored in a common storage unit which is preferably located at the common IPTV system. By storing the video data of more than one operator in a common storage unit, additional cost savings are provided. It is understood that alternatively, it is also possible to use distributed storage units and to provide the VoD data from these storage units to the common IPTV system when required.

In a preferred variant the common IPTV system is owned and operated by one of the of IPTV operators which also performs the administration of the customers of the other IPTV operators, the other IPTV operators being preferably operators of private networks, such as hospitals, airports, enterprises, campuses etc. In this case, the other IPTV operators delegate the administration of their groups of customers to the IPTV operator which operates the common IPTV system, thus further reducing the administrative efforts for providing IPTV. Administrative tasks which may be delegated comprise inter alia: access authorization, allocation, charging, logging, or updating of the movie database. When the administration of the customers is centralized and performed by only one of the IPTV operators, the other IPTV operators may be regarded as some kind of "virtual" IPTV operators.

A further aspect of the invention is implemented in an IPTV system for providing at least two IPTV data streams to at least two groups of customers, the at least two groups of customers being attributed to different IPTV operators, the IPTV system comprising: a head end for distributing the IPTV data streams to each group of customers, and a customizing unit for adding individual characteristics of the IPTV operators, preferably brandings and/or individual Electronic Program Guides, to the IPTV data streams provided to the at least two groups of customers. An individual branding may be a logo of the operator or a specific layout being characteristic for a particular operator shown in the menu pages, a base color of the menu pages being characteristic for a particular operator, or the recommendation of a particular movie as the movie of the day in the film menu pages, or other individualizing functions. An individualized Electronic Program Guide shows only the content of Live TV and movies which is available to the customers of a specific operator (restricted menu), as in general not all of the channels / movies available in the common IPTV system are offered by a particular provider to the group of customers which is assigned to him.

The information about the brandings may be provided from each of the IPTV operators to the common IPTV system, brandings which do not regularly change, e.g. the logo of the operators, being permanently stored in the common IPTV system, whereas brandings which have to be modified regularly, e.g. each day, are provided from respective branding units of the operators to the common IPTV system.

In a preferred embodiment, the IPTV system further comprises a selection unit for selecting the content of Live TV data contained in the IPTV data streams in dependence of the IPTV operator. Each IPTV operator may select an individual group of TV channels from the total number of TV channels which are available in the common IPTV system, the selection being also an individual characteristic of the IPTV operator.

In a further preferred embodiment, the IPTV system further comprises a storage unit for storing video data to be added to the IPTV data streams for providing Video on Demand, VoD, to at least one group of customers. The selection of the VoD data which is made available to each group of customers may also be a characteristic of the IPTV operator. It will be understood that the video data which is added to the data streams will only be available to the customers who have requested it.

Preferably, the IPTV system further comprises an administration unit for administrating customer data of the customers of each group of customers. In this case, administrative tasks such as adding or removing customers from the groups of customers may be performed in a centralized administration unit.

A further aspect of the invention is implemented in a computer network comprising an IPTV system as described above, the computer network preferably further comprising at least two border nodes for connecting at least two groups of customers to the computer network. In particular, the computer network may be a global network such as the internet, the customers of the groups being subscribers to an IPTV operator which provides an IPTV data stream comprising the operator's characteristics directly to each of the customers. In this case, the customers are connected to the internet e.g. via a DSL modem located at the user's premises, the modem being connected to a PC or to a set-top box for viewing the information contained in the data streams.

Alternatively, the data streams from the IPTV system may be provided to border nodes of private networks, each IPTV data stream being distributed to the customers via a private network. In the latter case, either in the border node or in the set-top boxes of the customers, additional information such as operator-specific teletext or flashes relating to specific events, such as "today VoD at half the price" or "happy hour at the bar tonight" may be added to the data streams. Of course, it is also possible - and preferable - to transmit this information from the operators to the common IPTV system which then adds this information to the respective IPTV data stream.

The person skilled in the art will appreciate that not only the data streams to the groups of customers may have different characteristics, but also the data streams to the individual customers of each group may be individualized, as VoD data which is provided in the data streams may be made available only to the customer(s) which have requested it. For this purpose, a selection (filtering) may be performed in the border nodes.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: a schematic view of a computer network according to the state of the art,
- **Fig. 2**: a schematic view of a first embodiment of a computer network according to the invention, and
- **Fig. 3**: a schematic representation of a second embodiment of a computer network according to the invention.

### Detailed Description of Preferred Embodiments

**Fig. 2** shows a computer network **1'** which may be a global network such as the internet. For providing IPTV to three groups **5a** to **5c** of customers which are attributed to three different IPTV operators **A, B, C,** the network 1' comprises an IPTV system 2 with a head-end equipment 3 and a server 6. The head end equipment 3 generates three different IPTV data streams **4a** to **4c** of the MPEG format, typically in the Single-program transport stream (SPTS) mode. Each IPTV data stream 4a to 4c is distributed to a respective group 5a to 5c of customers. The customers of each group 5a to 5c are subscribers to one of the IPTV operators A, B, C and receive the respective data stream 4a to 4c e.g. via DSL modems connecting them to the network 1'.

For adding individual characteristics of the IPTV operators A, B, C to each of the IPTV data streams 4a to 4c, a customizing unit **7** is provided in the computer system 6. As such individual characteristics, menu pages e.g. of the EPG may be provided with specific brandings, i.e. graphical representations such as operator-specific logos or colors in the menu pages. The individual characteristics of the IPTV operators are provided to the common IPTV system 2 by respective branding units **10a** to **10c,** the branding unit 10a of IPTV operator A being arranged in the IPTV system 2 which is operated by IPTV operator A, the branding units 10b, 10c of the other IPTV operators B, C being implemented in computer systems arranged at remote locations in the network 1'.

Within the branding units 10a to 10c, not only information about the individual characteristics of the IPTV operators A, B, C is stored, but these are also used for the administration of the customers of each group 5a to 5c. In such a way, only the distribution of the IPTV data streams 4a to 4c is shared among the IPTV operators A, B, C, the control of the customer data being still in the hands of each IPTV operator A, B, C.

The IPTV system 2 further comprises a selection unit **8** which selects the content, in particular the channels, of live data contained in the IPTV data streams 4a to 4c in dependence of the operator A, B, C. The channels are selected from a total number of channels which may be taken straight from the broadcaster via an aerial or satellite dish of the IPTV system (not shown). In addition to live TV data the data streams 4a to 4c also comprise video data which may be requested by specific customers of the groups 5a to 5c as Video on Demand data. The video data which is added to the data streams 4a to 4c upon demand from the customers is stored in a central storage unit **9** of the server 6. Using a centralized storage of video data has the advantage that the video data may be provided to the customers more rapidly as compared to the case when the video data is retrieved from a remote location within the network 1'. Alternatively, in case that the amount of data to be stored is too large, specific storage units distributed over the network 1' may be provided by the operators A, B, C, being typically implemented on the same computer systems as the branding units 10a to 10c.

Whereas in the example of Fig. 2, each IPTV operator A, B, C provides its services to customers who are individually linked to the network 1', in the network 1" of **Fig. 3****,** the access of the customers of two of the groups 5b, 5c is only possible via respective border nodes **11b, 11c,** the two groups of customers 5b, 5c being part of local networks **12b, 12c,** typically LANs, which are owned and operated by the (private) IPTV operators B, C. The local networks 12b, 12c may be provided in schools, enterprises, on campuses, etc.

In the network 1 ", although the IPTV operators B, C still use their branding units 10b, 10c for transmitting information about the individual characteristics which have to be added to the IPTV data streams in the IPTV system 2, the administration of the groups 5b, 5c of customers is performed in a centralized administration unit 13, the latter being also used for administration of the group 5a of customers of the first IPTV operator A, the customers of which are individually linked to the network 1 ", typically also being a global network such as the internet. The branding units 10b, 10c of the operators B, C may be typically implemented in computer systems in or close to the border nodes 11 b, 11 c or in the global network 1 ".

The person skilled in the art will appreciate that although in Figs. 2 and 3, the first operator A is the one which owns and operates the IPTV system 2, it is also possible that the IPTV system 2 is commonly owned and operated by all of the IPTV operators A, B, C. Moreover, it is also possible in the example shown in Fig. 2 to centralize the administration of the customers (users) in a common administration unit of the IPTV system 2. Also, in the example of Fig. 3, the first group of customers may be part of a local network.

In any case, by providing the possibility to add an individual branding to IPTV data streams distributed by a single IPTV system allows a plurality of IPTV operators to share the IPTV system, thus considerably reducing the cost for the distribution of IPTV data.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the spirit and scope of the invention, as defined by the appended claims, and equivalents thereof.

## Claims

1. Method for providing at least two data streams (4a to 4c) for Internet Protocol Television, IPTV, to at least two groups (5a to 5c) of customers, the at least two groups (5a to 5c) of customers being attributed to different IPTV operators (A, B, C), the method comprising:
distributing the at least two IPTV data streams (4a to 4c) from a common IPTV system (2) to each group (5a to 5c) of customers, and
adding individual characteristics of the different IPTV operators (A, B, C), preferably brandings and/or individualized Electronic Program Guides, to the IPTV data streams (4a to 4c) distributed to the at least two groups (5a to 5c) of customers.

2. Method according to claim 1, wherein adding of the individual characteristics to the IPTV data streams (4a to 4c) is performed in the common IPTV system (2).

3. Method according to claim 1, wherein a selection of the content of Live Television data contained in each of the IPTV data streams (4a to 4c) is performed in dependence of the IPTV operator (A, B, C).

4. Method according to claim 1, wherein video data to be added to at least one IPTV data stream (4a to 4c) for providing Video on Demand, VoD, to at least one group (5a to 5c) of customers is stored in a common storage unit (9) which is preferably located at the common IPTV system (2, 2').

5. Method according to claim 1, wherein the common IPTV system (2') is operated by one of the of IPTV operators (A) which also performs the administration of the customers of the other IPTV operators (B, C), the other IPTV operators (B, C) being preferably operators of private networks (12b, 12c).

6. IPTV system (2, 2') for providing at least two IPTV data streams (4a to 4c) to at least two groups (5a to 5c) of customers, the at least two groups (5a to 5c) of customers being attributed to different IPTV operators (A, B, C), the IPTV system (2, 2') comprising:
a head end (3) for distributing the IPTV data streams (4a to 4c) to each group (5a to 5c) of customers, and
a customizing unit (7) for adding individual characteristics of the IPTV operators (A, B, C), preferably brandings and/or individualized Electronic Program Guides, to the IPTV data streams (4a to 4c) distributed to the at least two groups (5a to 5c) of customers.

7. IPTV system according to claim 6, further comprising a selection unit (8) for selecting the content of Live TV data contained in the IPTV data streams (4a to 4c) in dependence of the IPTV operator (A, B, C).

8. IPTV system according to claim 6, further comprising a storage unit (9) for storing video data to be added to the IPTV data streams (4a to 4c) for providing Video on Demand, VoD, to at least one group (5a to 5c) of customers.

9. IPTV system according to claim 6, further comprising: an administration unit (13) for administrating customer data of the customers of each group (5a to 5c) of customers.

10. Computer network (1', 1 ") comprising an IPTV system (2, 2') according to claim 6, the computer network (1', 1") preferably further comprising at least two border nodes (11 b, 11 c) for connecting at least two groups of customers (5b, 5c) to the computer network (1 ").
